# EUROPÄISCHE PATENTSCHRIFT

(11) **EP 3 696 699 B1**
(45) Veröffentlichungstag und Bekanntmachung des Hinweises auf die Patenterteilung: **04.01.2023**
(21) Anmeldenummer: 19156839.3
(22) Anmeldetag: 13.02.2019
(51) Int. Cl.: G06F 21/57

(54) **SICHERE UND FLEXIBLE FIRMWAREAKTUALISIERUNG IN ELEKTRONISCHEN GERÄTEN**
SECURE AND FLEXIBLE FIRMWARE UPDATING IN ELECTRONIC DEVICES
MISE À JOUR SÛRE ET FLEXIBLE DU MICROLOGICIEL DANS DES APPAREILS ÉLECTRONIQUES

(43) Veröffentlichungstag der Anmeldung: 19.08.2020
(73) Patentinhaber: Siemens Aktiengesellschaft, 80333 München (DE)
(72) Erfinder: Fries, Steffen, 85598 Baldham (DE); Güttinger, Andreas, 90765 Fürth (DE); Lambio, Marco, 90552 Röthenbach a. d. Pegnitz (DE)

(56) Entgegenhaltungen:
- DE-A1-102013 205 051
- US-B1- 6 976 163

## Beschreibung

Die vorliegende Erfindung betrifft das technische Gebiet der Aktualisierung von Firmware in elektronischen Geräten. Die vorliegende Erfindung betrifft insbesondere Verfahren zur Aktualisierung einer Firmware in einem elektronischen Gerät. Die vorliegende Erfindung betrifft ferner ein elektronisches Gerät und ein Computerprogramm, die jeweils zum Durchführen des Verfahrens konfiguriert sind.

Für viele Geräte werden derzeit Sicherheitsmaßnahmen für die eingesetzte Firmware (oder auch das Betriebssystem) verwendet. Ziel dabei ist es die Integrität und auch die Authentizität der Firmware sicherzustellen. Dies wird im Allgemeinen durch eine digitale Signatur des Firmware Images erreicht. Wird die Firmware auf einem Gerät aktualisiert, so wird vor dem eigentlichen Einspielen zuerst die digitale Signatur überprüft. Dabei wird ebenfalls das Zertifikat zum zugehörigen Signaturschlüssel überprüft, zu dem im Gerät typischerweise das Root-Zertifikat vorhanden ist.

Zwar wäre die Benutzung eines einzigen Schlüsselpaares für die Signaturerstellung einfach, jedoch birgt dies Probleme bei der Umstrukturierung des Produktportfolios oder auch des Herstellers. Es wird ein Verfahren benötigt, das die Signaturerstellung für einen Hersteller sowie die Überprüfung auf den Geräten unter Einbeziehung von Strukturinformationen des Produktportfolios oder auch abhängig von bestimmten Eigenschaften der zu signierenden Firmware ermöglicht. Dabei soll ebenfalls berücksichtigt werden, dass bei Verkauf von Firmenteilen, die Signaturmechanismen für existierende Signaturen inklusive der dafür notwendigen Infrastruktur (Zertifikatskette) für den ursprünglichen Hersteller weiter genutzt werden können. Gleichzeitig soll einem neuen Eigentümer ermöglicht werden weitere Firmware-Signaturen zu erstellen.

Aus der US 6,976,163 B1 geht ein Verfahren zum regelbasierten Aktualisieren einer Firmware hervor.

Der vorliegenden Erfindung liegt die Aufgabe zugrunde, ein solches Verfahren bereitzustellen.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird ein Verfahren zur Aktualisierung einer Firmware in einem elektronischen Gerät beschrieben. Das beschriebene Verfahren weist Folgendes auf: (a) Erhalten einer Aktualisierungsdatei, die eine neue Firmware, mindestens eine Signatur und ein Zertifikat aufweist, wobei das Zertifikat eine erste Verifikationsinformation aufweist, die indikativ für solche elektronische Geräte ist, die die neue Firmware verwenden können, (b) Auslesen einer in dem elektronischen Gerät gespeicherten zweiten Verifikationsinformation, (c) Vergleichen der ersten Verifikationsinformation mit der zweiten Verifikationsinformation, (d) falls die erste Verifikationsinformation der zweiten Verifikationsinformation entspricht, Überprüfen der mindestens einen Signatur, und (e) falls die Überprüfung der mindestens einen Signatur erfolgreich ist, Ersetzen der Firmware des Gerätes mit der neuen Firmware.

Dem beschriebenen Verfahren liegt die Erkenntnis zugrunde, dass ein Einfügen von einer (ersten) Verifikationsinformation in das Signaturzertifikat (für die Firmware) und ein Hinterlegen von einer (zweiten) Verifikationsinformation im Gerät eine einfache und flexible Überprüfung der Verwendbarkeit einer neuen Firmware ermöglicht.

Es weisen die erste Verifikationsinformation und die zweite Verifikationsinformation jeweils eine oder mehrere Teilinformationen auf.

Mit anderen Worten mag sowohl die erste als auch die zweite Verifikationsinformation eine oder mehrere Teilinformationen enthalten, insbesondere einen oder mehreren Parameterwerte. Wenn eine Verifikationsinformation mehrere Teilinformationen enthält, sind diese vorteilhafterweise hierarchisch geordnet. Gemäß einem weiteren Ausführungsbeispiel der Erfindung weisen die Teilinformationen eine oder mehrere der folgenden Informationen auf: eine Herstellerinformation, eine Produktserie, eine Seriennummer, eine Produktnummer, eine Produktgruppe, einen Konfigurationsstand, eine Produktionsländerkennung, eine Einsatzländerkennung, eine Kundeninformation, eine Konfigurationsinformation, einen Security Level und einen Testlevel.

Es wird ausdrücklich darauf hingewiesen, dass auch weitere Parameter als die soeben erwähnten verwendet werden können. Es bilden die Teilinformationen der ersten Verifikationsinformation einen ersten Domainnamen, die Teilinformationen der zweiten Verifikationsinformation bilden einen zweiten Domainnamen und die erste Verifikationsinformation entspricht der zweiten Verifikationsinformation, wenn der erste Domainnamen vollständig im zweiten Domainnamen enthalten ist.

Gemäß der Erfindung werden die einzelnen Teilinformationen zu einem Domainnamen, insbesondere einem FQDN (Fully Qualified Domain Name) zusammengefügt, d.h. es besteht eine priorisierte Reihenfolge der Teilinformationen. Weist die erste Verifikationsinformation z.B. die Teilinformationen A1, B1, C1 und D1 und die zweite Verifikationsinformation z.B. die Teilinformationen A2, B2, C2 und D2, dann ist der erste Domainnamen gleich D1.C1.B1.A1 und der zweite Domainnamen ist gleich D2.C2.B2.A2. Sind nun A1=A2, B1=B2, C1=C2 und D1=D2, dann wird es festgestellt, dass die ersten Verifikationsinformation der zweiten Verifikationsinformation entspricht.

Gemäß einem weiteren Ausführungsbeispiel der Erfindung ist die erste Verifikationsinformation in einem vorbestimmten Feld im Zertifikat gespeichert.

Abhängig von dem Typ des verwendeten Zertifikats, z.B. ein Zertifikat gemäß dem Standard X.509, weist dieses eine Reihe von Feldern auf. Das vorbestimmte Feld mag insbesondere das Feld "Common Name" und/oder das Feld "Subject Alternative Name" sein.

Gemäß einem weiteren Ausführungsbeispiel der Erfindung weist das Zertifikat eine Zertifikatserweiterung auf, in welcher die erste Verifikationsinformation gespeichert ist.

Gemäß einem weiteren Ausführungsbeispiel der Erfindung weist die Aktualisierungsdatei ferner ein Attributzertifikat auf, in welchem die erste Verifikationsinformation gespeichert ist.

Gemäß einem weiteren Ausführungsbeispiel der Erfindung ist die zweite Verifikationsinformation ganz oder teilweise in einem ROM des elektronischen Gerätes und/oder in der Firmware des elektronischen Gerätes und/oder in einem externen Gerät gespeichert.

Es ist die zweite Verifikationsinformation in der Firmware des elektronischen Gerätes gespeichert und die neue Firmware weist eine neue zweite Verifikationsinformation auf.

Gemäß der Erfindung ist es somit möglich, mit der Aktualisierung der Firmware auch die im Gerät hinterlegte zweite Verifikationsinformation zu aktualisieren. Dieser Ansatz ist insbesondere vorteilhaft im Falle eines Herstellerwechsels und/oder einer Produktlinientrennung.

Gemäß einem weiteren Ausführungsbeispiel der Erfindung wird, falls die erste Verifikationsinformation der zweiten Verifikationsinformation nicht entspricht, die Aktualisierungsdatei verworfen und eine Fehlermeldung und/oder ein Log-Eintrag erzeugt.

Mit anderen Worten wird die Signatur nicht geprüft, wenn die erste Verifikationsinformation der zweiten Verifikationsinformation nicht entspricht. Somit kann die aufwendige Datenverarbeitung in Verbindung mit dem Überprüfen der Signatur erspart werden, wenn die Firmware nicht für das elektronische Gerät vorgesehen oder geeignet ist.

Gemäß einem weiteren Ausführungsbeispiel der Erfindung weist die Aktualisierungsdatei eine Mehrzahl von Signaturen auf.

Die neue Firmware kann somit von mehreren Parteien, wie zum Beispiel einem Hersteller und einem Betreiber signiert werden.

Gemäß einem zweiten Aspekt der Erfindung wird ein elektronisches Gerät beschrieben, das (a) eine Schnittstelle zur Datenkommunikation mit einem externen Gerät, (b) einen Speicher und (c) einen Prozessor aufweist, wobei das elektronische Gerät zum Durchführen des Verfahrens gemäß dem ersten Aspekt oder einem der obigen Ausführungsformen konfiguriert ist.

Dieser Aspekt betrifft grundsätzlich ein elektronisches Gerät, das zum Aktualisieren einer Firmware durch Durchführen des Verfahrens gemäß dem ersten Aspekt konfiguriert ist.

Gemäß einem dritten Aspekt der Erfindung wird ein Computerprogramm mit Programmbefehlen beschreiben, die, wenn sie von einem Prozessor eines elektronischen Gerätes ausgeführt werden, zum Durchführen des Verfahrens gemäß dem ersten Aspekt oder einem der obigen Ausführungsformen konfiguriert sind.

Dieser Aspekt betrifft grundsätzlich ein Computerprogramm, das zum Aktualisieren einer Firmware durch Durchführen des Verfahrens gemäß dem ersten Aspekt konfiguriert ist.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Verfahrensansprüchen und andere Ausführungsformen der Erfindung mit Vorrichtungsansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung einer bevorzugten Ausführungsform.

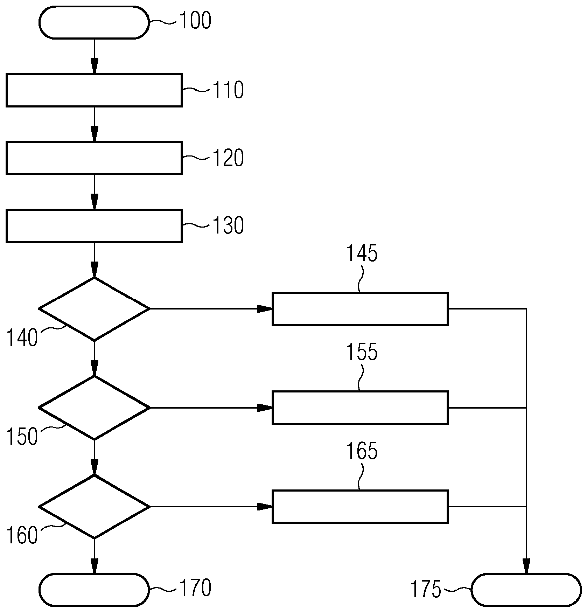

Figur 1 zeigt ein Flussdiagramm eines erfindungsgemäßen Verfahrens zur Aktualisierung einer Firmware in einem elektronischen Gerät.

Es wird darauf hingewiesen, dass die nachfolgend beschriebenen Ausführungsformen lediglich eine beschränkte Auswahl an möglichen Ausführungsvarianten der Erfindung darstellen.

Es sind wie eingangs erwähnt verschiedenen Verfahren zum Integritätsschutz von Firmware oder Software bekannt, wie z.B. "Fingerprinting" und "Code Signing". Bei Fingerprinting werden Hashwerte der zu schützenden Dateien veröffentlicht. Verwendete Hashfunktionen sind dabei oftmals MD5, SHA1, SHA256. Das "Code Signing" nutzt Zertifikate und korrespondierende private (geheime) Schlüssel (typischerweise gemäß dem Standard X.509), um die Integrität und Authentizität mittels einer digitalen Signatur von ausführbaren Dateien, Konfigurationsdaten und Skripten sicherzustellen. Hierbei können sowohl selbstsignierte als auch von einer vertrauenswürdigen CA ausgestellte Zertifikate genutzt werden. Ebenfalls bekannt sind Zertifikatsketten, die den logischen Weg von einem Endzertifikat ("Leaf Certificate") zu einem Wurzelzertifikat ("Root Certificate") beschreiben. Bekannt sind auch Wildcard Zertifikate, die für mehrere Unterdomänen einer Gesamtdomäne genutzt werden können. Beispielhafte "Code Signing" Lösungen, die auf X.509 Zertifikaten und korrespondierenden private Schlüssel aufsetzen und damit das Signieren und die Verifikation von Anwendungen und Dateien ermöglichen, sind z.B. Microsoft Authenticode, Primekey Code Signing und Thales e-Signing.

Eine Herausforderung bei Firmware-Signaturen für Geräte existiert wie eingangs erwähnt durch die lange Lebensdauer der Geräte im Feld und damit mit der Laufzeit der Signaturzertifikate (oder auch deren Wurzelzertifikate).

Eine Verbesserung bietet das in Figur 1 dargestellte Beispiel eines erfindungsgemäßen Verfahrens. Es beginnt bei 100 mit dem Erhalten einer Aktualisierungsdatei, die eine neue Firmware, eine Signatur und ein Zertifikat aufweist. Das Zertifikat weist eine erste Verifikationsinformation auf, die indikativ für solche elektronische Geräte ist, die die neue Firmware verwenden können. Die erste Verifikationsinformation mag eine oder mehrere Teilinformationen, insbesondere Parameterwerte aufweisen, die einen ersten Domainnamen (FQDN) bilden. Mögliche Parameterwerte sind insbesondere eine Herstellerinformation, eine Produktserie, eine Seriennummer, eine Produktnummer, eine Produktgruppe, ein Konfigurationsstand, eine Produktionsländerkennung, eine Einsatzländerkennung, eine Kundeninformation, eine Konfigurationsinformation und ein Testlevel. Die erste Verifikationsinformation kann in einem oder mehreren vorbestimmten Feldern des Zertifikats, in einer Zertifikatserweiterung des Zertifikats oder in einem mit dem Zertifikat verknüpften Attributzertifikat gespeichert sein.

Bei 110 wird nun das Image der neuen Firmware und bei 120 das Zertifikat aus der Aktualisierungsdatei ausgelesen.

Bei 130 wird eine in dem elektronischen Gerät gespeicherte zweite Verifikationsinformation ausgelesen. Diese zweite Verifikationsinformation hat eine ähnliche Struktur wie die oben erläuterten erste Verifikationsinformation, sie ist indikativ für das gegebene elektronische Gerät und mag eine oder mehrere Teilinformationen, insbesondere Parameterwerte aufweisen, die einen zweiten Domainnamen (FQDN) bilden.

Mögliche Parameterwerte sind auch hier insbesondere eine Herstellerinformation, eine Produktserie, eine Seriennummer, eine Produktnummer, eine Produktgruppe, ein Konfigurationsstand, eine Produktionsländerkennung, eine Einsatzländerkennung, eine Kundeninformation, eine Konfigurationsinformation und ein Testlevel. Die zweite Verifikationsinformation mag ganz oder teilweise in einem ROM des elektronischen Gerätes, und/oder in der Firmware des elektronischen Gerätes und/oder in einem externen Gerät gespeichert sein.

Bei 140 wird nun die erste Verifikationsinformation mit der zweiten Verifikationsinformation verglichen und es wird festgestellt, ob die erste Verifikationsinformation der zweiten Verifikationsinformation entspricht. Dies ist insbesondere der Fall, wenn der von der ersten Verifikationsinformation gebildete erste Domainnamen vollständig in dem von der zweiten Verifikationsinformation gebildeten zweiten Domainnamen enthalten ist. Ist dies nicht der Fall, wird bei 145 eine entsprechende Fehlermeldung ausgegeben und das Verfahren endet ohne Aktualisierung der Firmware des elektronischen Gerätes bei 175.

Wird es bei 140 festgestellt, dass die erste Verifikationsinformation der zweiten Verifikationsinformation entspricht, dann wird bei 150 die Signatur überprüft, d.h. es wird in an sich bekannter Art und Weise unter Verwendung des Zertifikats geprüft, ob die Aktualisierungsdatei und insbesondere die neue Firmware zuverlässig vom angegebenen Herausgeber signiert ist. Ist dies nicht der Fall, wird bei 155 eine entsprechende Fehlermeldung ausgegeben und das Verfahren endet ohne Aktualisierung der Firmware des elektronischen Gerätes bei 175.

Wird es bei 150 festgestellt, dass die Signatur zuverlässig ist, dann wird bei 160 der Installationsvorgang zum Ersetzen der Firmware des Gerätes durch die neue Firmware. Wird dieser Installationsvorgang erfolgreich abgeschlossen, dann endet das Verfahren bei 170 damit, dass das Gerät die neue Firmware aufweist. Kommt es bei dem Installationsvorgang zu Problemen, dann wird bei 165 eine entsprechende Fehlermeldung ausgegeben und das Verfahren endet ohne Aktualisierung der Firmware des elektronischen Gerätes bei 175.

Das beschriebene kann in einfacher Weise in Verbindung mit an sich bekannten Signatur- und Zertifikatkonzepten eingesetzt werden.

Zur weiteren Erläuterung folgt jetzt ein weiteres detailliertes Beispiel einer Implementierung.

Es wird grundsätzlich eine Lösung vorgeschlagen, die zusätzliche (lokale) Verifikationsinformationen in Form eines Namensschemas sowie Informationen im Zertifikat des Signaturschlüssels nutzt. Die Verwendung eines Namensschemas ermöglicht dabei z.B. eine Unterteilung in Produktlinien und/oder Produktgruppen und kann direkt über existierende Felder im Zertifikat ausgedrückt werden. Dies kann bei X.509 Zertifikaten der Common Name sein oder auch der Subject Alternative Name (SAN).

In einer erweiterten Variante kann eine Zertifikatserweiterung eingeführt werden, die zusätzliche Informationen ermöglicht. Das Namensschema kann z.B. auf einer Seriennummer des Gerätes aufsetzen, die ebenfalls eine vorgegebene Struktur hat. Ebenfalls möglich ist die Nutzung eines FQDN (Fully Qualified Domain Name). Ein FQDN hätte zusätzlich den Vorteil, dass bei einer Internetanbindung eine Verbindung zum Herausgeber des Firmware-Updates möglich ist.

Neben der Information im Zertifikat ist auf den Geräten, auf denen die Signatur geprüft werden soll, eine Verifikationsinformation notwendig. Diese Verifikationsinformation kann z.B. folgende Informationen enthalten (wahlweise oder kombiniert):
- Hersteller Information (HI), z.B. Domäne (siemens.com) oder Subdomäne (gridsecurity.siemens.com), DN
- Produktserie (PS)
- Seriennummer (SN)
- Produktnummer (PN)
- Produktgruppen (PG)
- Konfigurationsstand (KI)
- Produktionsländerkennung (PLK)
- Einsatzländerkennung (ELK)
- Kundeninformation (KD)
- Konfigurationsinformationen (KI)
- Security Level (SI)
- Testlevel (TL)

Vorteilhafterweise kann diese Information dazu genutzt werden sicherzustellen, dass eine Firmware mit gültiger Signatur nicht auf einer nicht zugeordneten Geräte-Hardware/Firmware oder einer nicht zugeordneten Gerätekonfiguration installiert wird. Dazu muss das Gerät entsprechend der Verifikationsinformationen prüfen, ob eine empfangene Firmware auch installiert werden darf bzw. für das Gerät vorgesehen ist. Dazu wird insbesondere der Domainname im des Signaturzertifikates genutzt, um zu prüfen, ob die neue Firmware für das Gerät bzw. die Produktlinie gedacht ist. Zusätzlich wird mittels des Signaturzertifikates und der Signatur der Firmware geprüft, ob die Firmware aus einer authentischen und autorisierten Quelle stammt. Damit wird sichergestellt, dass nur Firmware, die mit einem bestimmten Signaturschlüsselpaar signiert wurde, zur Installation akzeptiert wird. Die Verifikationsinformation wird im Gerät permanent gespeichert. In verschiedenen Ausführungsformen kann die Konfigurationsinformation als
- Teil eines ROM gespeichert werden und ist damit für die Lebenszeit des Produktes nicht veränderbar.
- Teil der Firmware vorhanden sein. Dies ermöglicht ein Update der Verifikationsinformation während der Lebenszeit des Produktes. Werden alle Verifikationsinformationen als Teil der Firmware gespeichert, erfordert dieser Ansatz jedoch auch eine geräteindividuelle Firmware.
- Teil einer separaten Hardware, z.B. einen Security Controller gespeichert. Das Update der Verifikationsinformation kann dann unabhängig vom Firmware-Update über einen separaten Prozess/Technologie realisiert werden.
- Kombination der zuvor genannten Ansätze.

Im folgenden Beispiel wird im Signaturzertifikat von einem spezifischen "Subject Alternative Name" ausgegangen, der bei der Installation durch das Gerät geprüft wird. Die Nutzung eines Wildcards "*" im Zertifikat bietet die Möglichkeit für weitere Bezeichner oder eine Unterstruktur, die die oben genannten Verifikationsinformationen enthalten kann, abzubilden:
- *.produktgruppe1.unternehmensbereich.unternehmen.land: Firmware-Updates für alle Geräte der Produktgruppe "produktgruppe1" aus dem Bereich "unternehmensbereich" des Unternehmens "unternehmen" im Land "land".
- *.zielmarkt1.produktgruppe1.unternehmensbereich1.unternehmen.land: bezeichnet eine Untergruppe der Geräte, die für den Zielmarkt "zielmarkt1" produziert wurden
- *.kunde1.produktgruppe1.unternehmensbereich1.unternehmen.land: bezeichnet eine Untergruppe der Geräte, die für den Kunden "kunde1" produziert wurden
- *.produktuntergruppe1.produktgruppe1.unternehmens-bereichl.unternehmen.land: bezeichnet eine Produktuntergruppe "produktuntergruppe1" der Geräte

Die Verifikationsinformation zur Prüfung der Informationen im Signaturzertifikat wird dazu vom Gerät vor der Prüfung der Firmware-Signatur zu einem Domänennamen kombiniert. Folgendes

Beispiel setzt auf den oben genannten Verifikationsinformationen auf:
Ein Gerät besitzt folgende Verifikationsinformationen nach der Herstellung:
   - Hersteller (DN): gridsecurity.musterfirma.land
   - Produktgruppen (PG): protectiondevice
   - Produktserie (PS): SG4711
   - Produktnummer (PN): SN1234
Damit ergibt sich ein FQDN für das Gerät zu
SN1234.SG4711.protectiondevice.gridsecurity.musterfirma.land
Das verwendete Signaturzertifikat muss im SAN die Parameter *.PQ.DN aufweisen. In dem Beispiel würde das Signaturzertifikat den folgenden DN haben
   *.protectiondevice.gridsecurity.musterfirma.land

Wird nun die Produktserie q200 an einen anderen Hersteller verkauft, wird für diesen ein Signaturzertifikat erstellt, mit dem nur neue Firmwareversionen für die Produktserie SG4711 erstellt werden können in der Form *.PS.PQ.DN:
*.SG4711.protectiondevice.gridsecurity.musterfirma.land

Damit kann ein bestehendes SG4711 Gerät eine Firmware vom neuen Hersteller oder vom selben Hersteller aber in einer anderen organisatorischen Struktur verifizieren, wenn diese die Parameter *.SG4711.protectiondevice.gridsecurity.musterfirma.land enthält. Dies ist möglich, da das Wildcard "*" in *.protectiondevice.gridsecurity.musterfirma.land durch "*.SG4711" um eine Hierarchiestufe erweitert wird. Der neue Hersteller ist dadurch nicht in der Lage für andere Produktserien außer SG4711 eine Firmware zu signieren. Der bisherige Hersteller wäre noch in der Lage weitere Firmware-Updates zu signieren, aber es wird davon ausgegangen, dass der neue Hersteller das ausgestellte Signaturzertifikat "*.SG4711.protectiondevice.gridsecurity.musterfirma.land" nur als Rollover-Zertifikat für ein herstellerspezifisches Zertifikat nutzt (z.B. *.SG4711.musterfirma2.land).

In einer Variante wird diese Information nicht im Subject Alternative Name (SAN) gespeichert, sondern in einer eigenen Zertifikatserweiterung. Eine eigene Zertifikatserweiterung bietet die Möglichkeit feingranular noch spezifische Information für die Verifikation mit einzufügen. Ein Beispiel für weitere Information kann die Testtiefe sein. So kann die Firmware nach Standardtests geprüft worden sein, eine andere Variante kann umfangreichere Tests, die einer Zertifizierung genügen, unterzogen worden sein. Auf Geräteseite kann damit z.B. vermieden werden, dass eine weniger getestete Firmware in einer kritischen Umgebung eingesetzt wird.

Bei der Prüfung der Firmware-Signatur wird neben der eigentlichen Integritätsprüfung der Firmware-Signatur auch der Inhalt der Verifikationsinformation des Signaturzertifikates (im SAN oder in der Zertifikatserweiterung) geprüft, ob es zur erwarteten lokalen Verifikationsinformation passt und installiert werden darf.

In einer weiteren Variante wird die Verifikationsinformation in einem Attributzertifikat gespeichert, dass bei der Signaturprüfung durch das Gerät erwartet wird. Dies hat den Vorteil, dass der Lebenszyklus des Signaturzertifikates unabhängig von der Verifikationsinformation gehalten werden kann.

Wird eine Produktlinie getrennt, so kann ein Signaturzertifikat für diese spezifische Produktlinie erstellt und weitergegeben werden, bei dem der Wildcard um die spezielle Produktlinieninformation ersetzt wird. Ausgehend von den oben gegebenen Beispielen, führt die Weitergabe des Signaturzertifikates *.SG4711.protectiondevice.gridsecurity.musterfirma.land dazu, das mit dem dazugehörigen Signaturschlüssel nur noch Firmware-Signaturen für Geräte der Produktserie q200 erzeugt werden können aber nicht mehr für Geräte der Serie ak400.

Durch den neuen Hersteller muss jedoch auch sichergestellt werden, dass die Verifikationsparameter auf dem Gerät beim Einspielen der Firmware aktualisiert werden, damit keine Wildcard-Zertifikate der Art
*.protectiondevice.gridsecurity.musterfirma.land akzeptiert werden. Diese (neuen) Verifikationsparameter können z.B. vom neuen Hersteller über ein Firmware-Update zur Verfügung gestellt werden oder aber über Konfiguration dem Gerät bekannt gemacht werden.

Mittels des beschriebenen Verfahrens können produkt- oder produktgruppenspezifisch Firmware-Signaturen erstellt und verifiziert werden. Dies ermöglicht zum einen eine Differenzierung beim Einspielen einer neuen Firmware durch das Gerät basierend auf den Verifikationsparametern. Zum anderen wird damit die Möglichkeit unterstützt, Produktionslinien und auch die damit verbundenen Verantwortlichkeiten zu trennen.

Die vorgeschlagene Lösung unterstützt dabei die Abtrennung von Produktlinien beim ursprünglichen Hersteller bei Beibehaltung des bestehenden Ansatzes für Firmwaresignaturen.

Nur der Käufer (neuer Hersteller) ist in der Verantwortung ein neues Signaturzertifikat zu erzeugen, wenn vermieden werden soll, dass der ursprüngliche Hersteller keine gültigen Firmwareupdates für die Produktlinie mehr signieren kann.

Zusätzlich können über die Verifikationsparameter weitere Eigenschaften der neuen Firmware sichergestellt werden, wie z.B. ein bestimmter Qualitätslevel beim Test.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zur Aktualisierung einer Firmware in einem elektronischen Gerät, das Verfahren aufweisend
Erhalten (100) einer Aktualisierungsdatei, die eine neue Firmware, mindestens eine Signatur und ein Zertifikat aufweist, wobei das Zertifikat eine erste Verifikationsinformation aufweist, die indikativ für solche elektronische Geräte ist, die die neue Firmware verwenden können,
Auslesen (130) einer in dem elektronischen Gerät gespeicherten zweiten Verifikationsinformation,
Vergleichen (140) der ersten Verifikationsinformation mit der zweiten Verifikationsinformation,
falls die erste Verifikationsinformation der zweiten Verifikationsinformation entspricht, Überprüfen (150) der mindestens einen Signatur, und
falls die Überprüfung der mindestens einen Signatur erfolgreich ist, Ersetzen (160) der Firmware des Gerätes mit der neuen Firmware, wobei die erste Verifikationsinformation und die zweite Verifikationsinformation jeweils eine oder mehrere Teilinformationen aufweisen, und wobei die Teilinformationen der ersten Verifikationsinformation einen ersten Domainnamen bilden, wobei die Teilinformationen der zweiten Verifikationsinformation einen zweiten Domainnamen bilden und wobei die erste Verifikationsinformation der zweiten Verifikationsinformation entspricht, wenn der erste Domainnamen vollständig im zweiten Domainnamen enthalten ist,
und wobei
die zweite Verifikationsinformation in der Firmware des elektronischen Gerätes gespeichert ist und wobei die neue Firmware eine neue zweite Verifikationsinformation aufweist, und wobei
mit der Aktualisierung der Firmware auch die im Gerät hinterlegte zweite Verifikationsinformation aktualisiert wird.

2. Das Verfahren gemäß dem vorhergehenden Anspruch, wobei die Teilinformationen eine oder mehrere der folgenden Informationen aufweisen: eine Herstellerinformation, eine Produktserie, eine Seriennummer, eine Produktnummer, eine Produktgruppe, einen Konfigurationsstand, eine Produktionsländerkennung, eine Einsatzländerkennung, eine Kundeninformation, eine Konfigurationsinformation, einen Security Level und einen Testlevel.

3. Das Verfahren gemäß einem der Ansprüche 1 oder 2, wobei die erste Verifikationsinformation in einem vorbestimmten Feld im Zertifikat gespeichert ist.

4. Das Verfahren gemäß einem der Ansprüche 1 oder 2, wobei das Zertifikat eine Zertifikatserweiterung aufweist, in welcher die erste Verifikationsinformation gespeichert ist.

5. Das Verfahren gemäß einem der Ansprüche 1 oder 2, wobei die Aktualisierungsdatei ferner ein Attributzertifikat aufweist, in welchem die erste Verifikationsinformation gespeichert ist.

6. Das Verfahren gemäß einem der vorhergehenden Ansprüche, wobei die zweite Verifikationsinformation ganz oder teilweise in einem ROM des elektronischen Gerätes, in der Firmware des elektronischen Gerätes und/oder in einem externen Gerät gespeichert ist.

7. Das Verfahren gemäß einem der vorhergehenden Ansprüche, wobei falls die erste Verifikationsinformation der zweiten Verifikationsinformation nicht entspricht, die Aktualisierungsdatei verworfen und eine Fehlermeldung und/oder ein Log-Eintrag erzeugt wird.

8. Das Verfahren gemäß einem der vorhergehenden Ansprüche, wobei die Aktualisierungsdatei eine Mehrzahl von Signaturen aufweist.

9. Elektronisches Gerät aufweisend
eine Schnittstelle zur Datenkommunikation mit einem externen Gerät,
einen Speicher und
einen Prozessor,
wobei das elektronische Gerät zum Durchführen des Verfahrens gemäß einem der vorhergehenden Ansprüche konfiguriert ist.

10. Computerprogramm mit Programmbefehlen, die, wenn sie von einem Prozessor eines elektronischen Gerätes ausgeführt werden, zum Durchführen des Verfahrens gemäß einem der Ansprüche 1 bis 9 konfiguriert sind.

## Claims

1. Method for updating firmware in an electronic device, the method comprising
receiving (100) an update file comprising new firmware, at least one signature and a certificate, wherein the certificate comprises first verification information that is indicative of those electronic devices that are able to use the new firmware,
reading (130) second verification information stored in the electronic device,
comparing (140) the first verification information with the second verification information,
if the first verification information corresponds to the second verification information, checking (150) the at least one signature, and,
if the check on the at least one signature is successful, replacing (160) the firmware of the device with the new firmware, wherein the first verification information and the second verification information each comprise one or more pieces of partial information, and wherein the partial information of the first verification information forms a first domain name, wherein the partial information of the second verification information forms a second domain name and wherein the first verification information corresponds to the second verification information if the first domain name is contained completely in the second domain name,
and wherein
the second verification information is stored in the firmware of the electronic device and wherein the new firmware comprises new second verification information, and wherein
the second verification information recorded in the device is also updated when the firmware is updated.

2. Method according to the preceding claim, wherein the partial information comprises one or more of the following pieces of information: manufacturer information, a product series, a serial number, a product number, a product group, a configuration level, a producing countries identifier, a using countries identifier, customer information, configuration information, a security level and a test level.

3. Method according to either of Claims 1 and 2, wherein the first verification information is stored in a predetermined field in the certificate.

4. Method according to either of Claims 1 and 2, wherein the certificate comprises a certificate extension in which the first verification information is stored.

5. Method according to either of Claims 1 and 2, wherein the update file further comprises an attribute certificate in which the first verification information is stored.

6. Method according to one of the preceding claims, wherein all or part of the second verification information is stored in a ROM of the electronic device, in the firmware of the electronic device and/or in an external device.

7. Method according to one of the preceding claims, wherein if the first verification information does not correspond to the second verification information, the update file is rejected and an error message and/or a log entry is generated.

8. Method according to one of the preceding claims, wherein the update file comprises a plurality of signatures.

9. Electronic device comprising
an interface for data communication with an external device,
a memory and
a processor,
wherein the electronic device is configured to perform the method according to one of the preceding claims.

10. Computer program containing program commands that, when executed by a processor of an electronic device, are configured to perform the method according to one of Claims 1 to 9.

## Revendications

1. Procédé de mise à jour d'un micrologiciel dans un appareil électronique, le procédé comprenant
obtention (100) d'un fichier de mise à jour, qui a un micrologiciel nouveau, au moins une signature et un certificat, le certificat ayant une première information de vérification, indiquant les appareils électroniques, qui peuvent utiliser le micrologiciel nouveau,
lecture (130) d'une deuxième information de vérification mise en mémoire dans l'appareil électronique,
comparaison (140) de la première information de vérification à la deuxième information de vérification,
si la première information de vérification correspond à la deuxième information de vérification, contrôle (150) de la au moins une signature, et
si le contrôle de la au moins une signature est couronné de succès, remplacement (160) du micrologiciel de l'appareil par le micrologiciel nouveau, la première information de vérification et la deuxième information de vérification ayant chacune une ou plusieurs informations partielles et les informations partielles de la première information ou de vérification formant un premier nom de domaine, les informations partielles de la deuxième informations de vérification formant un deuxième nom de domaine et la première information de vérification correspondant à la deuxième information de vérification, si le premier nom de domaine est contenu entièrement dans le deuxième nom de domaine,
et dans lequel
la deuxième information de vérification est mise en mémoire dans le micrologiciel de l'appareil électronique et le micrologiciel nouveau ayant une deuxième information de vérification nouvelle, et dans lequel
par la mise à jour du micrologiciel, on met à jour également la deuxième information de vérification mise en mémoire dans l'appareil.

2. Procédé suivant la revendication précédente, dans lequel les informations partielles ont une ou plusieurs des informations suivantes : une information de fabricant, une série de produit, un numéro de série, un numéro de produit, un groupe de produit, un état de configuration, une reconnaissance du pays de production, une reconnaissance du pays d'utilisation, une information de client, une information de configuration, un security level et un test level.

3. Procédé suivant l'une des revendications 1 ou 2, dans lequel la première information de vérification est mise en mémoire dans un champ défini à l'avance du certificat.

4. Procédé suivant l'une des revendications 1 ou 2, dans lequel le certificat a une extension du certificat, dans laquelle la première information de vérification est mise en mémoire.

5. Procédé suivant l'une des revendications 1 ou 2, dans lequel le fichier de mise en mémoire a en outre un certificat d'attribut, dans lequel la première information de vérification est mise en mémoire.

6. Procédé suivant l'une des revendications précédentes, dans lequel la deuxième information de vérification est mise en mémoire en tout ou partie dans une ROM de l'appareil électronique, dans le micrologiciel de l'appareil électronique et/ou dans un appareil extérieur.

7. Procédé suivant l'une des revendications précédentes, dans lequel, si la première information de vérification ne correspond pas à la deuxième information de vérification, on rejette le fichier de mise en mémoire, et on produit un message d'erreur et/ou une inscription d'enregistrement.

8. Procédé suivant l'une des revendications précédentes, dans lequel le fichier de mise à jour a une pluralité de signatures.

9. Appareil électronique comportant
une interface de communication de données avec un appareil extérieur,
une mémoire et
un processeur,
dans lequel l'appareil électronique est configuré pour effectuer le procédé suivant l'une des revendications précédentes.

10. Programme d'ordinateur ayant des instructions de programme, qui, lorsqu'elles sont exécutées par un processeur d'un appareil électronique, sont configurées pour effectuer le procédé suivant l'une des revendications 1 à 9.
